# EUROPEAN PATENT SPECIFICATION

(11) **EP 0 508 011 B1**
(45) Date of publication and mention of the grant of the patent: **28.09.1994**
(21) Application number: 91303181.1
(22) Date of filing: 10.04.1991
(51) Int. Cl.: C01G 21/10, C01G 21/02

(54) **A method and apparatus to continuously manufacture red lead**
Verfahren und Vorrichtung zur kontinuierlichen Herstellung von Mennige
Procédé et appareil pour la préparation de plomb rouge en continu

(43) Date of publication of application: 14.10.1992
(73) Proprietor: MATSUSHITA ELECTRIC INDUSTRIAL CO., LTD., Kadoma-shi, Osaka-fu, 571 (JP)
(72) Inventor: Yasuda, Hiroshi, Toyohashi-shi, Aichi-ken (JP); Yonezu, Kazuyoshi, Toyohashi-shi, Aichi-ken (JP); Takahashi, Katsuhiro, Toyohashi-shi, Aichi-ken (JP); Yamamoto, Kenzo, Toyohashi-shi, Aichi-ken (JP)
(74) Representative: Crawford, Andrew Birkby

(56) References cited:
- US-A- 1 770 777
- WORLD PATENTS INDEX LATEST Week 2791, Derwent Publications Ltd., London, GB; AN 91197392 & JP-A-3 122 488 (MATSUSHITA ELEC) 24 May 1991

## Description

### BACKGROUND OF THE INVENTION

This invention relates to a method and apparatus to continuously manufacture red lead (Pb₃O₄) which is a primary material to produce storage batteries, anti-corrosion paint, glass, etc.

Metal oxide such as red lead is manufactured by a continuous manufacturing apparatus wherein raw metal lead is oxidized within a heated air atmosphere. The important part of said continuous manufacturing apparatus is a rotary kiln having a rotating inner cylinder which is a cylindrical reaction chamber disposed at a slightly slanted horizontal position and is rotated at a low speed.

The raw metal material is continuously supplied to an inlet port of said rotating inner cylinder, located at the end which is slightly higher. Since said rotating inner cylinder of the kiln is heated at high temperature by an internal or external heating means, the metal material is oxidized as it is gradually proceeded from said inlet port toward an outlet port provided at the other lower end where the oxidized product is continuously recovered. Both said inlet and outlet of said rotating inner cylinder are conventionally protected by a respective hood means.

This apparatus is provided with not only a heating means to oxidize said raw material at high temperature, but also a high-volume air-supplying means capable of supplying air at a rate which may reach thirty times that actually needed for oxidation, or introducing high-volume local cooling air in order to prevent overheating of said raw material caused by excessive heat of reaction.

Conventionally, red lead is manufactured by baking lead monoxide at about 450^{°}C. Whereas lead monoxide is manufactured by oxidizing metal lead powder, mass production of lead monoxide is performed by using a ball-mill or Barton-pot type lead powder manufacturing device wherein produced lead powder is air-oxidized. However, the lead monoxide manufactured by this method inevitably contains 10 to 30% metal lead powder.

However, when lead monoxide containing metal lead powder in such amounts is converted to red lead by using the above mentioned continuous oxidizing apparatus, the yield of red lead is extremely low because of inadequate capability of said apparatus to control abrupt generation of reaction heat. Therefore, lead monoxide had to be prepared through an independent apparatus wherein metal lead powder is gradually oxidized.

### DISCLOSURE OF THE INVENTION

The present invention is purposed to solve the above-mentioned drawbacks associated with a conventional red lead manufacturing apparatus. More specifically, the invention is purposed to offer a new continuous red lead manufacturing apparatus of higher red lead yield, to which lead monoxide material containing more than 10% metal lead powder can be supplied, excluding the use of an independent metal lead oxidizing device.

In other words, the present invention provides a new method and apparatus enabling stable and continuous production of red lead. This is accomplished by supplying lead monoxide powder containing metal lead powder continuously into the inlet port of the rotating inner cylinder of a kiln wherein the lead monoxide powder containing metal lead powder is continuously turned into red lead as it is heated, oxidized, and transported toward the outlet port of the rotating inner cylinder of the kiln, and by recycling to the inlet port a part of the product available at the outlet port.

Furthermore, the present method features that the product powder returned to the inlet port is highly fine and light weight powder having an average particle size of about one µm or less, which is caught by, a dust collecting bag-filter provided at the outlet port. Thus, the product powder available at the outlet port of the rotary kiln, or the powder caught by the bag filter, contains only red lead and lead monoxide powder containing very little metal lead powder because it is oxidized thoroughly within the rotating inner cylinder of the kiln.

By returning a part of the product powder to the inlet, the metal lead density in the raw material can be effectively reduced, and the reaction heat caused by abrupt oxidation of metal lead powder can be suppressed well. Although the product powder containing a fair amount of red lead is in a stable condition at the vicinity of the outlet port, it is at an elevated temperature as high as 450^{°}C.

Therefore, if a raw material containing a higher amount of metal lead powder is introduced there, it may bring an abnormal temperature rise to values as high as 500^{°}C because of its abrupt oxidizing reaction.

However, if a part of the product powder is returned to the inlet, the red lead contained therein will be dissociated again into lead oxide at such high temperature according to an endothermic reaction, and this can lower the temperature of the overall material existing there and contribute to stabilize the kiln temperature.

Moreover, the finer the powder returned to the inlet, the higher the above specified effects for the same amount of returned powder. The reason for this is that the finer the powder, the higher and more even dispersion of the same in the raw material can be accomplished.

The powder caught by a bag-filter provided at the outlet port is well suited to attain the above cited objects because the average size of caught powder is less than one µm.

Although the content of red lead in the product powder caught by the bag-filter is less than that of the powder available at the outlet, it contains very little metal lead powder either. Although the effect available by its endothermic reaction could be less than those available by a conventional method, this is compensated very well by using such finer product powder.

### BRIEF EXPLANATION OF THE DRAWINGS

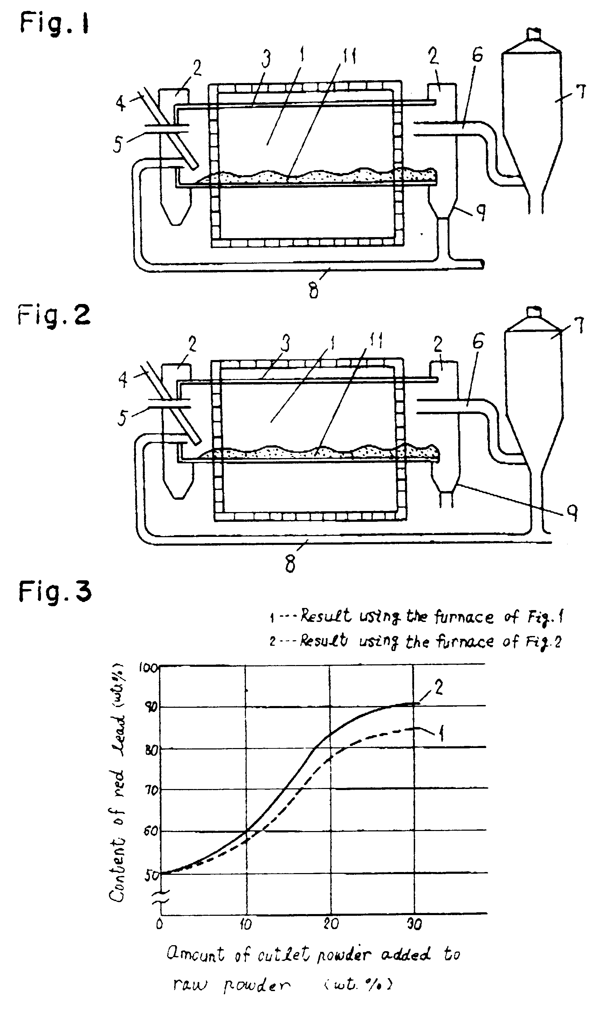

Fig. 1 shows an outline of red lead manufacturing apparatus of the invention, and Fig. 2 shows another red lead manufacturing apparatus of the invention. Fig. 3 shows a typical yield of red lead attained by the apparatus of the invention, showing a relationship between the content of returned powder and the content of metal lead in the product powder.

### THE EMBODIMENTS OF THE INVENTION

An embodiment of the invention is now explained in the following with reference to a manufacturing apparatus of the invention.

An outline of red lead manufacturing apparatus of the invention is shown in Fig. 1 wherein 1 is the rotating inner cylinder of a kiln acting as a reaction chamber, consisting of a cylindrical furnace 3 the two ends of which are covered by respective hoods 2. While a pipe-shaped lead powder supplying inlet 4 and an air inlet duct 5 are provided at the inlet port, an air exhaust duct 6 and a bag-filter 7 connected thereto are provided at the outlet port.

As a mean to return part of the product powder to the inlet, an end of conveyer pipe 8 is connected to the product outlet 9 provided at the bottom of outlet hood 2, while the other end of the conveyer pipe 8 is connected to the inlet of the rotating inner cylinder 3.

Fig. 2 shows another red lead manufacturing apparatus of the invention. In this embodiment, an end of conveyer pipe 8 shown in Fig. 1 is connected to the lower end of the bag filter 7, while the other end of the conveyer pipe 8 is connected to the inlet of rotating inner cylinder 3. Said air inlet duct 5 and air exhaust duct 6 are provided in order to supply air necessary to oxidize the lead powder supplied into the furnace and to control the furnace temperature.

In manufacturing red lead by using said manufacturing apparatus, raw lead powder material consisting of 60 to 90% of lead monoxide and metal lead powder for the rest, is supplied into the rotating inner cylinder 3 through the inlet port 3, and a part of the product powder recovered at the outlet or a part of the fine powder caught by the bag filter is returned to the kiln inlet through a conveyer pipe 8 from either the product outlet 9 or the bag filter 7.

In this case, a higher yield of red lead is expectable for a higher ratio of the powder returned through the conveyer pipe 8 into the rotating inner cylinder of kiln 3 against the raw lead powder. However, this effect may saturate beyond a certain level of powder returned to the inlet of the kiln through the conveyer pipe 8.

Fig. 3 shows the content of red lead in the product powder available at the outlet of kiln 3 for a given amount of input raw material taking the ratio of returned powder to the input as a parameter and when using the apparatus shown in Figs. 1 and 2. As shown in Fig. 3, a higher red lead yield can be obtained when a part of the powder caught by the bag filter is returned to the inlet (Case 1) than when a part of the product powder available at the outlet is directly returned to the inlet 5 (Case 2).

Furthermore, in addition to the means shown above, an addition of drops of water to the powder at the inlet could be an effective means for attaining more stable red lead production. This is because the addition of drops of water not only removes the heat at the inlet port but oxidizes the metal lead at lower temperature.

As above described, the present invention offers a new and high yield red lead manufacturing method and apparatus by returning a part of the product powder available at the outlet of the rotary kiln, or a part of the fine powder caught by a bag filter, to the inlet of the rotary kiln.

## Claims

1. A method of continuous manufacture of red lead, by which a mixture of metal lead powder and lead monoxide powder is supplied into the horizontally disposed rotating inner cylinder of a kiln through an inlet of the kiln in order to bake said mixture of metal lead powder and lead monoxide powder as said mixture is gradually transported toward an outlet of said rotating inner cylinder of the kiln by its rotation, wherein a part of the product powder obtained at said outlet of the rotating inner cylinder of the kiln is returned to said inlet of the kiln in order to bake it again in said rotating inner cylinder of the kiln.

2. A method according to claim 1, wherein a part of the product powder to be returned to said inlet of said rotating inner cylinder of the kiln is powder caught by a dust collecting bag filter provided at said outlet of the kiln.

3. A method according to claim 2, wherein the said powder collected by said bag filter to be returned to said inlet of said rotating inner cylinder has an average particle size less than one µm.

4. An apparatus for the continuous manufacture of red lead comprised of a rotary kiln having a rotating inner cylinder which is disposed at a nearly horizontal position, to which a mixture of lead monoxide and metal oxide powder is continuously supplied at its inlet end so that said mixture of lead monoxide and metal oxide powder is baked as said mixture is gradually transported toward the outlet end of said rotating inner cylinder by the rotation thereof, equipped with means by which a part of said product powder is returned from said outlet end to the inlet end of said rotating kiln.

5. An apparatus according to claim 4, wherein said means for returning a part of the product powder from said outlet end toward said inlet end of said rotating inner cylinder, is a conveyer pipe means connecting the bottom of a hood provided at said outlet with said inlet of the rotating inner cylinder.

6. An apparatus according to claim 4, wherein said means for returning a part of the product powder from said outlet end toward said inlet end of said rotating inner cylinder, is a conveyer pipe means connecting a dust collecting bag filter provided at said outlet with said inlet of the rotating inner cylinder.

## Patentansprüche

1. Verfahren zur kontinuierlichen Herstellung von Mennige, durch das ein Gemisch aus metallischem Bleipulver und Bleimonoxid-Pulver in einen horizontal angeordneten drehenden Innenzylinder eines Ofens durch einen Einlaß des Ofens eingeführt wird, um das Gemisch aus metallischem Bleipulver und Bleimonoxid-Pulver zu erhitzen, während das Gemisch allmählich durch Drehung des sich drehenden Innenzylinders des Ofens zu einem Auslaß desselben transportiert wird, wobei ein Teil des an dem Auslaß des sich drehenden Innenzylinders des Ofens erhaltenen Pulverprodukts zu dem Einlaß des Ofens zurückgeführt wird, um es in dem sich drehenden Innenzylinder des Ofens wieder zu erhitzen.

2. Verfahren nach Anspruch 1, bei dem ein Teil des zu dem Einlaß des sich drehenden Innenzylinders des Ofens zurückzuführenden Pulverprodukts durch ein an dem Auslaß des Ofens vorgesehenes Staubsammel-Beutelfilter eingefangenes Pulver ist.

3. Verfahren nach Anspruch 2, bei dem das durch das Beutelfilter gesammelte zu dem Einlaß des sich drehenden Innenzylinders zurückzuführende Pulver eine durchschnittliche Teilchengröße von weniger als einem µm besitzt.

4. Vorrichtung für die kontinuierliche Herstellung von Mennige, bestehend aus einem Drehofen mit einem sich drehenden Innenzylinder, der in einer nahezu horizontalen Lage angeordnet ist, dem ein Gemisch aus Bleimonoxid und metallischem Bleipulver kontinuierlich an seinem Einlaßende zugeführt wird, so daß das Gemisch aus Bleimonoxid und Metalloxidpulver erhitzt wird, während das Gemisch allmählich zu dem Auslaßende des sich drehenden Innenzylinders mit Hilfe von dessen Drehung transportiert wird, ausgerüstet mit Mitteln, durch die ein Teil des Pulverprodukts von dem Auslaßende zu dem Einlaßende des Drehofens zurückgeführt wird.

5. Vorrichtung nach Anspruch 4, bei der das Mittel zum Zurückführen eines Teils des Pulverprodukts von dem Auslaßende zu dem Einlaßende des sich drehenden Innenzylinders ein Förderrohrmittel ist, das die Unterseite einer am Auslaß vorgesehenen Haube mit dem Einlaß des sich drehenden Innenzylinders verbindet.

6. Vorrichtung nach Anspruch 4, bei der das Mittel zum Zurückführen eines Teils des Pulverprodukts von dem Auslaßende zu dem Einlaßende des sich drehenden Innenzylinders ein Förderrohrmittel ist, das ein an dem Auslaß vorgesehenes Staubsammel-Beutelfilter mit dem Einlaß des sich drehenden Innenzylinders verbindet.

## Revendications

1. Procédé de préparation en continu de plomb rouge, par lequel un mélange de poudre de métal de plomb et de poudre de monoxyde de plomb est introduit dans le cylindre intérieur en rotation disposé horizontalement d'un four, par l'intermédiaire d'une entrée du four, afin de cuire ledit mélange de poudre de métal de plomb et de poudre de monoxyde de plomb à mesure que ledit mélange est progressivement transporté vers une sortie dudit cylindre intérieur en rotation du four par sa rotation, dans lequel une partie de la poudre produite obtenue à ladite sortie du cylindre intérieur en rotation du four est renvoyée à ladite entrée du four afin de la recuire dans ledit cylindre intérieur en rotation du four.

2. Procédé selon la revendication 1, dans lequel une partie de la poudre produite à renvoyer à ladite entrée dudit cylindre intérieur en rotation du four est de la poudre recueillie par un sac de filtration capteur de poussières disposé à ladite sortie du four.

3. Procédé selon la revendication 2, dans lequel ladite poudre captée par ledit sac de filtration, à renvoyer à ladite entrée dudit cylindre intérieur en rotation, possède une taille moyenne de particule inférieure à 1 µm.

4. Appareil pour la préparation en continu de plomb rouge comprenant un four rotatif possédant un cylindre intérieur en rotation, disposé selon une position presque horizontale, dans lequel un mélange de monoxyde de plomb et de poudre d'oxyde de métal est introduit en continu à son extrémité d'entrée, de sorte que ledit mélange de monoxyde de plomb et de poudre d'oxyde de métal est cuit à mesure que ledit mélange est progressivement transporté vers l'extrémité de sortie dudit cylindre intérieur en rotation par la rotation de celui-ci, équipé d'un moyen par lequel une partie de ladite poudre produite est renvoyée de ladite extrémité de sortie à l'extrémité d'entrée dudit four en rotation.

5. Appareil selon la revendication 4, dans lequel ledit moyen pour renvoyer une partie de la poudre produite de ladite extrémité de sortie à ladite extrémité d'entrée dudit cylindre intérieur en rotation est un moyen constitué par un tuyau d'acheminement reliant le bas d'une calotte disposée à ladite sortie avec ladite entrée du cylindre intérieur en rotation.

6. Appareil selon la revendication 4, dans lequel ledit moyen pour renvoyer une partie de la poudre produite de ladite extrémité de sortie à ladite extrémité d'entrée dudit cylindre intérieur en rotation est un moyen constitué par un tuyau d'acheminement reliant un sac de filtration capteur de poussières disposé à ladite sortie avec ladite entrée du cylindre intérieur en rotation.
